# EUROPEAN PATENT APPLICATION

(11) **EP 1 939 305 A1**
(43) Date of publication of application: **02.07.2008**
(21) Application number: 06301309.8
(22) Date of filing: 29.12.2006
(51) Int. Cl.: C21B 5/00, C21B 7/16

(54) **Process for making pig iron in a blast furnace**

(71) Applicant: L'AIR LIQUIDE, Société Anonyme pour l'Etude et l'Exploitation des Procédés Georges Claude, 75007 Paris (FR); American Air Liquide Inc, Fremont, California 94538 (US)
(72) Inventor: Joumani, Youssef, 75321 Paris Cedex 07 (FR); Penfornis, Erwin, 75321 Paris Cedex 07 (FR); Mortberg, Magnus, 75321 Paris Cedex 07 (FR); Yuan, Quan, Fremont, CA 94538 (US); Ghani, Usman, Fremont, CA 94538 (US); Pranda, Pavol, Fremont, CA 94538 (US); Otero-Martinez Pedro, 75321 Paris Cedex 07 (FR); Labegorre, Bernard, 75321 Paris Cedex 07 (FR); Constantin Gabriel, 75321 Paris Cedex 07 (FR); Kalcevic Robert, 75321 Paris Cedex 07 (FR); Mueller Burkhard, 75321 Paris Cedex 07 (FR)
(74) Representative: De Vleeschauwer, Natalie Y.L.D.

(57) **Abstract**

A process for making pig iron in a blast furnace, wherein supersonic oxygen containing gas is injected at the bottom of the furnace and reaches the dead man zone at a velocity which is high enough to substantially avoid the deposition of coal fines in said zone while at the same time the PCl rate may be increased.

## Description

### Background

Blast furnaces (BF) have been widely used to produce pig iron in iron and steel making mills. During the process, chunks of iron ore and coke in the size of centimeters are loaded as alternate layers from the top of the blast furnace to form a slowly descending packed-bed. The coke acts both as a fuel to produce the heat and as a reducing agent for the process. In addition, it provides mechanical support to the ore to ensure the proper permeability of the packed-bed, which is of critical importance for the operation. High temperature blast is injected into the bottom portion of the furnace through the blowpipes and tuyeres, forming the raceways. The ascending hot blast reacts with the coke to generate the heat and the reducing agent for the process.

Due to the lower cost of coal over coke, Pulverized Coal Injection (PCI) has been widely used to reduce the process cost. In addition to the economic advantage, the pulverized coal injection also leads to minimum reduction in the temperature in the raceway and thus has the potential for maximum replacement of coke, compared to other fuels such as natural gas or fuel oil.

During the process, pulverized coal particles are injected into the tuyeres through lances and then directed into the raceways as a substitute fuel. Due to very short residence time of the pulverized coal particles in the tuyere and raceway, a significant portion of pulverized coal particles do not burn completely by the time they reach the end of the raceway and enter the packed-bed.

As the PCI rate increases, more residual fines drift into the packed bed and the permeability for the central portion of the bed is lowered. Furthermore, too many fines (coal and coke) when accumulated in the bed hinder the proper gas flow in the bed and disturb the process. Reducing the unburned fines in the bed is one of the possible requirements for higher PCI rates.

Pulverized coal injection in blast furnaces has been in practice for over two decades. However, an optimal solution has still not been found to remedy the problems associated with high levels of PCI (typically above 180 kg/thm (ton of hot metal)) due to unburned char and fines generation.

Various attempts have been made to increase the PCI rate. For that purpose it has been disclosed in US3758090, EP0567513, JP5112806, EP576869, EP0554673 , JP11343511, JP11229010 and JP11209809 , various solutions for the enhancement of the mixing between the coal and the various oxidants used. Another tentative solution is disclosed in JP2002121609 wherein the injection streams of either coal or oxidant are pulsed.

While the prior art addresses the issue of improving the mixing of the oxidant gas and the pulverized coal, to provide earlier combustion with the hot blast, it does not address the issue of accumulation of the coal fines on the raceway walls and in the coke packed bed.

### Summary

Accordingly it is an object of the invention to provide additional burnout of the pulverized coal particles, as well as, according to a preferred embodiment, the burnout of the coal and coke fines accumulated on the raceway walls and in the coke packed bed, thereby allowing smooth operation of the blast furnace at higher rates.

Therefore it is provided a process for making pig iron in a blast furnace comprising the steps of :
- providing iron ore and coke, preferably in alternate layers, at the top of the furnace;
- injecting hot blast through at least one blast tuyere located close to the bottom of the furnace;
- injecting pulverized coal through at least one PCI tuyere located close to the bottom of the furnace;
- combusting the pulverized coal and the coke with the hot blast in order to provide heat to melt the ore and generate molten pig iron;
- recovering the molten pig iron at the bottom of the blast furnace;
said process further comprising the step of :
- injecting an additional oxygen containing gas at supersonic velocity through a supersonic nozzle located close to the bottom of the furnace, and thereby allowing said additional oxygen gas to reach the dead man zone of the furnace at a velocity which is high enough to substantially avoid the deposition of coal fines in said dead man zone.

The process according to the present invention thus makes it possible to increase the pulverized coal injection rate. (Increasing the pulverized coal injection generally means that the rate R' of coal injection according to the invention may be greater than the maximum value R of the rate of coal injection according to the prior art process wherein no injection of additional oxygen containing gas at supersonic velocity is provided).

Preferably the oxygen containing gas is an oxygen enriched gas comprising more than 21 % vol. O₂, preferably more than 85% vol. O₂, most preferably more than 95% vol.O₂.

According to a preferred aspect of the invention, the oxygen containing gas is injected through a plurality of supersonic tuyeres, preferably one supersonic tuyere for one hot blast tuyere.

The supersonic tuyeres are preferably located at about the same distance from each other.

According to one embodiment, the injection of the oxygen containing gas is continuous during substantially the whole duration of the injection of said gas.

According to another embodiment, the injection of the oxygen containing gas is discontinuous. Preferably the ratio between the duration of the injection and the non injection periods can be of quite different value, more preferably comprised between 1/12 and 1/2. However, while it is possible to provide during each hour between 5min to 30min of continuous injection followed by a period of non-injection of oxygen containing gas, it is even preferred to alternate injection and non injection periods during each hour. For example short duration injections (e.g. 1 min) followed by non-injection periods may be preferred particularly for the situations where plugging of the tuyeres is likely to happen.

According to a further embodiment, the oxygen containing gas may be preheated before injection through at least one of the supersonic tuyeres, the preheating temperature being preferably above 200°C, more preferably above 1000°C.

The hot blast itself can be oxygen enriched to provide a hot blast containing more than 21 % volume oxygen, more preferably more than 25% vol. O₂.

There are several possible embodiments for generating the oxygen containing gas such as:
- taking a portion of the hot blast which is compressed before being injected into the supersonic tuyere to deliver hot compressed oxygen containing gas;
- oxygen enrichment prior to compression : for example by taking ambient air that is subsequently enriched with oxygen prior to compression to deliver compressed oxygen enriched gas; according to a preferred embodiment the compressed oxygen enriched gas is preheated before being injected into the supersonic tuyere to deliver hot compressed oxygen containing gas.

According to another embodiment, the supersonic tuyere is located in the blast tuyere, or in the vicinity of the blast tuyere.

According to still another embodiment, the hot blast and the additional oxygen containing gas are injected through a supersonic tuyere, thus combining the injection of hot blast and of the additional oxygen containing gas.

According to a further embodiment, the hot blast is injected through a supersonic nozzle which is concentrically disposed around the supersonic nozzle through which the oxygen containing gas is injected; in this case, the distance between the two nozzles along the flow line of the gases is preferably comprised between zero and two times the nozzle diameter.

In the present description, the sentence "increasing the pulverized coal injection rate" also means that the supersonic injection, particularly that of the oxygen containing gas allows to increase the rate of injection of coal particles to reach the same acceptable level of yield of the blast furnace and reasonable level of complete combustion of the coal particles by the time they reach the end of the raceway. This increase of the PCI rate is preferably above 5%, usually expected to reach more preferably about 20%.

The terms "close to the bottom of the furnace" when applied to the location of the tuyeres used herein, mean a location in the vicinity or close to the location where the blast tuyeres are usually located in a blast furnace, with the aim of performing their function of gas injection and/or coal injection or the like to provide fuel or oxygen containing gas to develop combustion as appropriate in the raceway location.

Of course any combination of these various embodiments is possible and within the scope of this invention.

### Brief description of the drawings:

Various embodiments of the invention are described hereinafter with the drawings which represent:
Fig 1 a schematic view of a blast furnace;
Fig 2 a first embodiment according to a first aspect of the invention;
Fig 3 a second embodiment according to a different aspect of the invention;
Fig 4 a third embodiment according to another aspect of the invention;
Fig 5 a schematic view of an embodiment for heating the oxygen containing gas;
Fig 6 another embodiment regarding the preheating of the oxygen containing gas;

### Detailed description

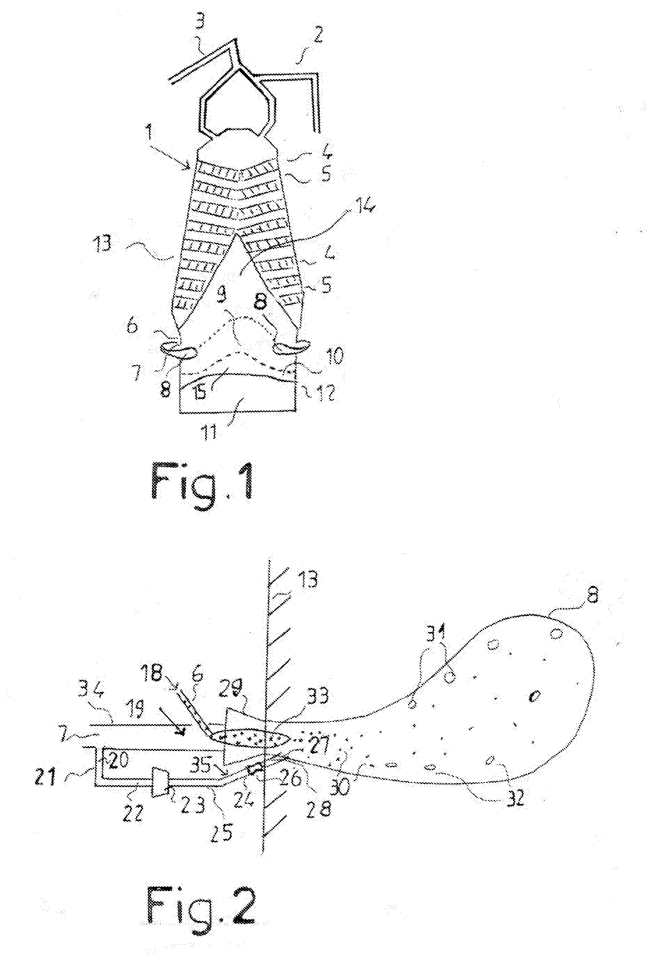

Fig 1 represents a schematic view of a blast furnace 1, where the ore, coke, fluxes and other additives are introduced at the top of the furnace through the conveying system 2 into said furnace in order to alternatively create a layer of coke 5 and a layer of ore and additives 4, which are piled up along the walls 13 of the furnace 1.

The hot blast 7 is injected into the raceway 8 through the hot blast tuyeres (e.g. twelve tuyeres connected to a circular pipe fed with hot blast, said tuyeres being at about the same distance from the next ones).

The deadman zone 9 is in the region of the vertical axis of symmetry of the furnace in a packed bed zone located just above the slag zone 15 covering the surface 10 of the molten metal (pig iron) 11, with on the side, the tap hole 12 through which the molten metal 11 may flow to the ladle.

According to a first embodiment of this invention, the injection of the oxidant gas (or oxygen containing gas) is carried out at high temperature and high velocity, preferably supersonic. The supersonic injection is preferred since it allows a better penetration length for the generated jet.

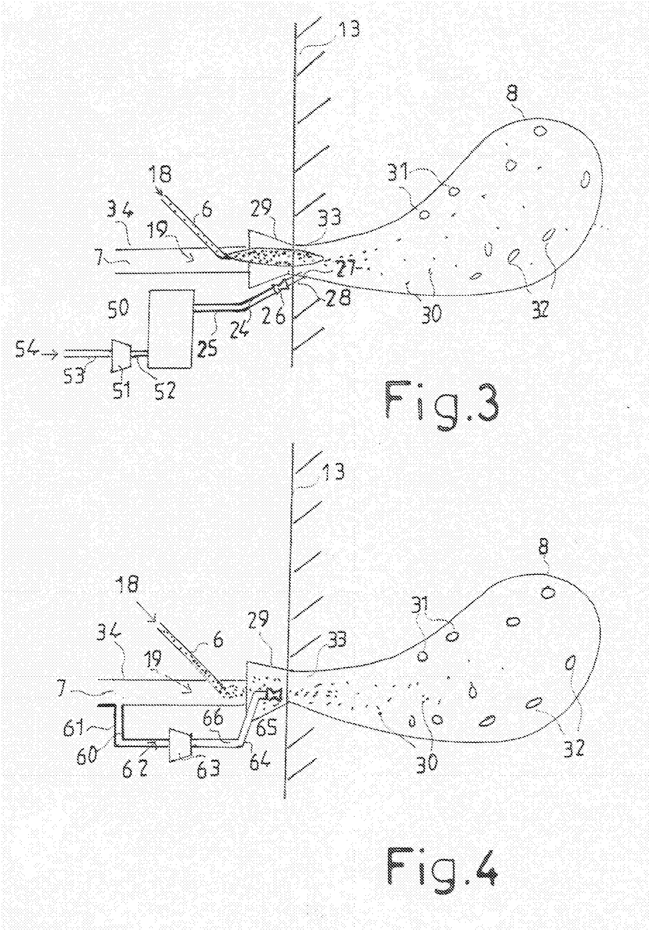

The injection of this oxidant flow at high temperature can be achieved in several ways:
1. If the oxidant flow is highly pure oxygen (92% to 100%), this flow can be preheated in a dedicated heat exchanger to a temperature preferably comprised between 200°C and 1200°C. This embodiment is represented in fig.3. The heat exchanger 50 can be of any type, namely regenerative, recuperative, direct contact or other. A preferred heat exchanger 50 is a regenerative or recuperative heat exchanger that preheats oxygen with hot air extracted from the main blast duct. This hot oxygen, which is supplied under pressure (preferably between 5 and 50 bars), flows through an appropriate supersonic nozzle, which allows the generation of high velocity jets. This nozzle is fitted to a lance located inside the tuyere or inside the raceway.
   This type of supersonic nozzle, which design is well known by the man skilled in the art, is usually named a "Laval nozzle".
   In fig.3, the cold oxygen 54 is sent through the duct 53 to the compressor 51 where it is compressed at appropriate pressure (and already partly heated) and sent through the duct 52 to the heat exchanger 50 (which source of heat from hot blast is not represented in fig 2), the compressed oxygen 24 being delivered through the duct 25 to the sonic throat 26 and the divergent 27 into the raceway 8 close to the exit of the hot blast duct 34 in which the hot blast 7 flows and close to the exit of the injection duct 6 then 33 of carbon particles 18 into the raceway 8, preferably at an angle with the oxygen injection.
   In the hot blast 7, it is possible also to additionally inject some oxygen or oxygen containing gas 19 upstream of the supersonic nozzle 29 which delivers hot blast at supersonic velocity into the raceway. The carbon particles 18 are injected through the duct 6 also through the supersonic nozzle 29 or close to and substantially parallel to the hot blast in 33 into the raceway 8.
   Into this raceway 8 are shown (with exaggerated sizes) coke particles 31, metal droplets 32 and unburned chars 30;
2 If the oxidant or oxygen containing gas is air, this flow can be extracted from the main blast duct 34 in order to form a secondary-stream 21 of hot blast 7 in the duct 20. The secondary-stream blast 21 is compressed by the compressor 23 before being injected through the duct 25, the supersonic nozzle 26 and the tuyere 27 into the blast furnace 1. The compressor outlet pressure is chosen according to the required injection velocity, so as to ensure that the secondary blast jet acquires enough momentum to reach the raceway end when it is injected through an appropriate nozzle. In either embodiment, including the embodiments of fig.2,3 or 4, the oxidant flow may be injected either directly into the blast furnace 1, or back inside the tuyere or both in an appropriate location so as not to impinge on tuyere walls or PCI lances. The second configuration (fig.2 and 4) is preferred since it is likely to require less and easier maintenance than the first one (fig.3).
3. If the oxidant flow is oxygen-enriched air (O₂ content anywhere between 21 and 100%), this flow can be generated based on a secondary-stream hot blast flow, as disclosed also on fig.2. The secondary-stream blast 21, extracted from the primary stream blast 7 is compressed by the compressor 23 before oxygen injection 35 into this stream 24 at a desired location upstream the injection point (tuyere 27). The compressor outlet pressure is chosen according to the required injection velocity, so as to ensure that the secondary blast jet acquires enough momentum to reach the raceway end when it is injected through an appropriate nozzle (The pressure of the oxygen flow 35 is usually above or equal to the pressure of this compressed hot blast).

Fig.4 discloses another embodiment wherein a portion 61 of the hot blast 7 is extracted through the pipe 60 from the main duct 34 to the compressor 63 (with, if deemed appropriate, an additional oxygen injection 62 in the duct 60 and/or in the duct 64 in 66), the duct 64 being connected to the supersonic nozzle 65 located inside the hot blast subsonic, sonic or supersonic tuyere 29 (usually subsonic) close to the pulverized coal injection 33.

(On all these figures, the same reference number indicates the same device or function).

In all these configurations, the injection lance is preferably made of ceramic or of high temperature alloys such as Inconel.

As already explained here above, this high velocity oxidant stream supplies oxygen to the back end of the raceway and promotes the burnout of fines in the packed bed. In addition, the high speed stream jet is also preventing the formation of a coal/coke fines shell along the raceway back-end wall, through a mechanical impact on this wall. Both effects increase the permeability of the packed bed which means a smoother operation of the blast furnace. In this respect, one preferred embodiment is the use of oxygen-enriched air rather than pure oxygen, since it allows the injection of a larger volume of gas at high velocity for a given amount of injected oxygen, thus increasing the momentum of the jet and its penetration towards the back end of the raceway. The effect of this supersonic stream may thereby be controlled by controlling the amount of oxygen injected in the stream.

According to another embodiment of the invention, for a given injection velocity through a supersonic nozzle, the use of high temperature gas requires a much lower supply pressure than for a gas at ambient temperature For example, in order to generate a gas jet at 500 m/s at 3.5 bars, it may be necessary to compress the gas at 10 bars of pressure if it is preheated to 240°C, whereas 32 bars would be needed if the gas were to be injected at ambient temperature.

According to still another embodiment of this invention it is possible to carry out discontinuous injection of the oxygen containing gas. This embodiment may be preferred when the oxygen containing gas is not preheated at high temperature. In this particular case the energy loss due to the cold injection is significant, and it is necessary to limit the amount of cold gas injected over time. It is therefore preferred in such case to periodically inject the oxygen containing gas, which may be at a temperature close to ambient temperature, but also at lower temperature if the oxygen gas is cold (e.g. from a liquid storage at cryogenic temperature). The energy loss will then be kept as low as possible, while carbon fines may be removed once accumulated. The optimum time between two injections is to be tuned on a case by case basis for each furnace. This injection may be varied between a high and a low (even zero) flow value.

The secondary flow in all these embodiments is preferably designed such that the secondary stream blast can be directed to the desired places. Thus, by targeting the injection of the secondary oxygen enriched stream in the raceway close to its farthest boundary, a location which is usually an oxygen depleted location, oxygen may be made available to the coal particles during the later stage of char burnout to allow higher burnout.

As explained before here above, heating the oxygen containing gas prior to its injection in the blast furnace may be a possible alternative to save energy in the pig iron manufacturing process; for safety reasons it is preferred to preheat the gas (when containing more than 90% 02) without direct contact with the source of heat. The heat exchange may be carried out in safe condition e.g. by indirect heat exchange with said hot gas in a heat exchanger.

Usually, as the oxygen containing gas injection may not be continuous through the process, it may be necessary to provide one heat exchanger per tuyere.

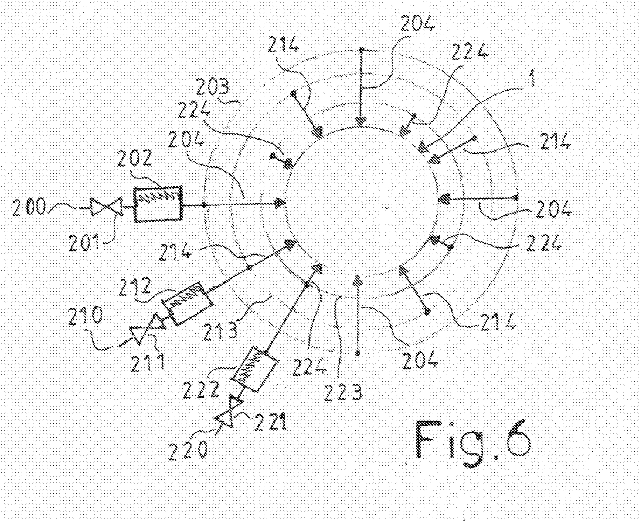

When discontinuous injection is carried out, particularly when the gas is injected to each tuyere successively, then only a few heat exchangers may be necessary (e.g. three as exemplified on fig.6). Each heat exchanger may then feed a set of tuyeres, with only one tuyere blowing hot oxygen containing gas.

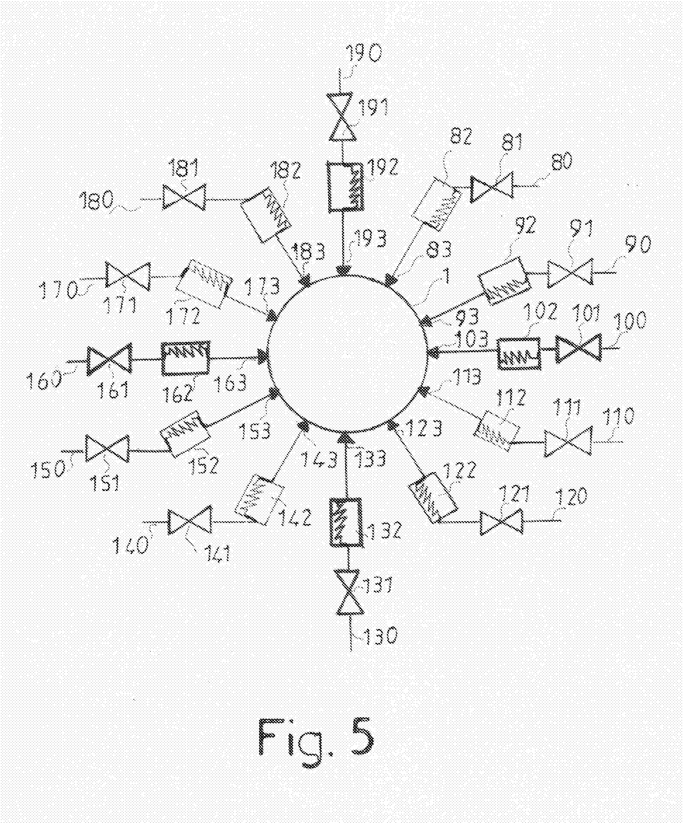

Fig. 5 exemplifies an embodiment for preheating the gas with the same number of heat exchangers 82 92 102 112 122 132 142 152 162 172 182 and 192 and of injection nozzles 83 93 103 113 123 133 143 153 163 173 183 and 193 at the bottom of the blast furnace to inject preheated oxygen containing gas; each heat exchanger is fed respectively through a gas line 80 90 100 110 120 130 140 150 160 170 180 and 190 and a valve 81 91 101 111 121 131 141 151 161 171 181 and 191;

Fig. 6 exemplifies another embodiment of the heat exchange system which may be used for the purpose of preheating the said gas; in this case only three heat exchangers 202 212 and 222 (for example, but it could be two, even one, or four or six in the case of twelve injections; however it may be envisioned to have heat exchangers of different power allowing any combination between 1 and 12) have been used, each of them feeding a ring 203 213 and 223 which respectively distributes the hot gas through the injection pipes (and the supersonic nozzles if any) 204 214 and 224 to the bottom of the blast furnace 1. The flow regulation system of the oxygen containing gas is upstream of the valve system and is not represented in the drawings.

## Claims

1. - A process for making pig iron in a blast furnace comprising the steps of:
- providing iron ore and coke, preferably in alternate layer, at the top of the furnace;
- injecting hot blast through at least one blast tuyere located close to the bottom of the furnace;
- injecting pulverized coal through at least one PCI tuyere located close to the bottom of the furnace;
- combusting the pulverized coal and the coke with the hot blast in order to provide heat to melt the ore and generate molten pig iron;
- recovering the molten pig iron at the bottom of the blast furnace,
said process further comprising the step of :
- injecting an additional oxygen containing gas at supersonic velocity through a supersonic tuyere located close to the bottom of the furnace, and thereby allowing said additional oxygen gas to reach the deadman zone of the furnace at a velocity which is high enough to substantially avoid the deposition of coal and/or coke fines in said deadman zone.

2. - A process according to claim 1, wherein the oxygen containing gas comprises more than 21 % vol. of O₂.

3. - A process according to claim 2, wherein the oxygen containing gas comprises more than 85% vol. O₂, preferably more than 95% vol. O₂.

4. - A process according to one of claims 1 to 3, wherein the oxygen containing gas is injected through a plurality of supersonic tuyeres, preferably one supersonic tuyere for one hot blast tuyere.

5. - A process according to one of claims 1 to 4, wherein the injection of the oxygen containing gas is continuous during substantially the whole duration of the injection of said gas.

6. - A process according to one of claims 1 to 4, wherein the injection of the oxygen containing gas is discontinuous, preferably with a ratio injection duration/non-injection duration which may vary from 1/12 to 1/2.

7. - A process according to one of claims 1 to 6, wherein the oxygen containing gas is preheated before injection through a supersonic tuyere.

8. - A process according to claim 7, wherein the oxygen containing gas is preheated to a temperature above 200°C, preferably above 1000°C.

9. - A process according to claim 1 to 8, wherein the hot blast is oxygen enriched.

10. - A process according to claim 9, wherein the hot blast comprises more than 21 % vol. oxygen, preferably more than 25% vol. oxygen.

11. - A process according to one of claims 1 to 10, wherein the oxygen containing gas is a portion of the hot blast which is compressed before being injected in the supersonic tuyere to deliver hot compressed oxygen containing gas.

12. - A process according to one of claims 1 to 10, wherein the oxygen containing gas is ambient air with oxygen enrichment prior to compression to deliver compressed oxygen enriched gas.

13. - A process according to claim 12, wherein the compressed oxygen enriched gas is preheated before being injected into the supersonic tuyere to deliver hot compressed oxygen containing gas.

14. - A process according to one of claims 11 to 13, wherein the supersonic tuyere is located in the blast tuyere.

15. - A process according to one of claims 1 to 10, wherein the hot blast and the oxygen containing gas are injected through a supersonic tuyere.

16. - A process according to one of claims 1 to 15, wherein the hot blast is injected through a supersonic nozzle which is concentrically disposed around a supersonic nozzle through which the oxygen containing gas is injected.
